# EUROPÄISCHE PATENTSCHRIFT

(11) **EP 0 735 800 B1**
(45) Veröffentlichungstag und Bekanntmachung des Hinweises auf die Patenterteilung: **11.06.2003**
(21) Anmeldenummer: 96103669.6
(22) Anmeldetag: 08.03.1996
(51) Int. Cl.: H05B 41/02

(54) **Betriebsgerät für eine elektrische Lampe**
Apparatus for operating an electric lamp
Appareil pour alimenter une lampe électrique

(30) Priorität: 31.03.1995 DE 19512130
(43) Veröffentlichungstag der Anmeldung: 02.10.1996
(73) Patentinhaber: Patent-Treuhand-Gesellschaft für elektrische Glühlampen mbH, 81543 München (DE)
(72) Erfinder: Schadhauser, Klaus, 81927 München (DE)

(56) Entgegenhaltungen:
- EP-A- 0 621 742
- DE-U- 9 106 789
- US-A- 5 086 249

## Beschreibung

Die Erfindung betrifft ein Betriebsgerät für eine elektrische Lampe gemäß dem Oberbegriff des Patentanspruchs 1.

Ein derartiges Betriebsgerät ist beispielsweise in der Offenlegungsschrift EP 0621 742 A2 beschrieben. Diese Druckschrift offenbart ein Gehäuse für ein elektrisches Lampen-Vorschaltgerät, das eine im wesentlichen quaderförmige Gestalt besitzt und aus einem Unter- sowie einem Oberteil besteht. Zum Oberteil gehören zwei abnehmbare Abdeckkappen, die mittels eines Schnappverschlusses mit dem Unterteil verbunden sind. Diese Schnappverschlüsse sind über einen schmalen Schlitz im Gehäuseoberteil zugänglich und können mit Hilfe eines Werkzeuges, beispielsweise eines Schraubenziehers, der in den Schlitz eingeführt wird, entriegelt werden. Dabei wirkt der Schraubenzieher als Keil und biegt die Rastlasche des Schnappverschlusses zurück, so daß die entsprechende Abdeckkappe abgenommen werden kann. Der Schnappverschluß bleibt allerdings nur solange geöffnet wie der Schraubenzieher auf die Rastlasche einwirkt, das heißt, der Schraubenzieher muß beim Abnehmen der Abdeckkappe mit einer Hand gehalten werden, so daß er die Rastlasche zurückbiegt, während die andere Hand die Abdeckkappe abnimmt.

Das deutsche Gebrauchsmuster G 91 06 789.8 beschreibt ein Leuchten-Modul mit einer Transformatorenhaube und einem Anschluß-Adapter. Die Transformatorenhaube besitzt Rastöffnungen, die in Schnapphaken des Anschluß-Adapters einrasten.

Es ist die Aufgabe der Erfindung, ein Betriebsgerät für eine elektrische Lampe bereitzustellen, das ein Gehäuse mit einem abnehmbaren Deckel besitzt, der einen einfachen Verschlußmechanismus aufweist, wobei der Verschlußmechanismus nicht von Hand, das heißt, nur mit Hilfe eines Werkzeuges geöffnet werden kann.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Kombination eines Bajonett- oder Schraubverschlusses mit einem Schnappverschluß, der nur über einen schmalen Schlitz zugänglich und entriegelbar ist, verhindert ein versehentliches Öffnen des Betriebsgerätgehäuses und bietet daher einen ausreichenden Berührungsschutz für die unterhalb des Deckels liegenden elektrischen Anschlüsse. Andererseits läßt sich der Verschluß mit Hilfe eines Werkzeuges, beispielsweise eines Schraubenziehers, problemlos öffnen. Der Bajonett- oder Schraubverschluß wird vorteilhafterweise von mehreren Noppen gebildet, die an der Innenwand des Gehäuses und an der Deckelaußenwand angeformt sind. Die Noppen sind vorteilhafterweise entweder längs einer Kreislinie oder längs einer Schraubenlinie am Gehäuses bzw. am Deckel angeordnet, wobei die Größe der Noppen und die Abstände zwischen den Noppen derart aufeinander abgestimmt sind, daß die Noppen des Deckels durch die Zwischenräume zwischen den Noppen des Gehäuses hindurchgreifen können. Dadurch kann der Deckel auf das Gehäuse aufgesetzt und mittels einer Vierteldrehung arretiert werden. Weitere Drehbewegungen des Deckels in Eindrehrichtung werden vorteilhafterweise mit Hilfe eines Anschlags unterbunden. Der Schnappverschluß besteht vorteilhafterweise aus einer einfachen Rast- oder Federlasche, die im Bereich der Noppen an den Deckel angeformt ist und hinter einer Rastnase an der Innenwand des Gehäuses, nach ca. einer Viertelumdrehung des Deckels im Uhrzeigersinn, einrastet und nur über einen schmalen Schlitz im Gehäuse zugänglich ist. Ein besonderer Vorteil des Schnappverschlusses ist darin zu sehen, daß er zusätzlich eine Feststellnoppe besitzt, hinter die die Rastlasche durch Einführen eines Werkzeuges in den schmalen Gehäuseschlitz und durch kurzzeitiges Ausüben eines leichten Druckes auf die Rastlasche zurückgebogen werden kann. Dadurch wird der Schnappverschluß entriegelt und außerdem die Rastlasche in der entriegelten Stellung fixiert, so daß der Bajonett- oder Schraubverschluß nun zum Entfernen des Deckels in Ausdrehrichtung betätigt werden kann.

Der Verschlußmechanismus eignet sich besonders gut für Betriebsgeräte mit einem im wesentlichen zylindrischen, insbesondere kreiszylindrischen Gehäuse.

Nachstehend wird die Erfindung anhand eines besonders bevorzugten Ausführungsbeispiels näher erläutert. Es zeigen:
- Figur 1: einen schematischen Querschnitt durch das Gehäuse eines erfindungsgemäßen Betriebsgerätes entsprechend des bevorzugten Ausführungsbeispiels (ohne Deckel)
- Figur 2: eine schematische Seitenansicht des Deckels für das Gehäuse gemäß des Ausführungsbeispiels von Figur 1
- Figur 3: einen schematischen Querschnitt durch den Deckel gemäß Figur 2

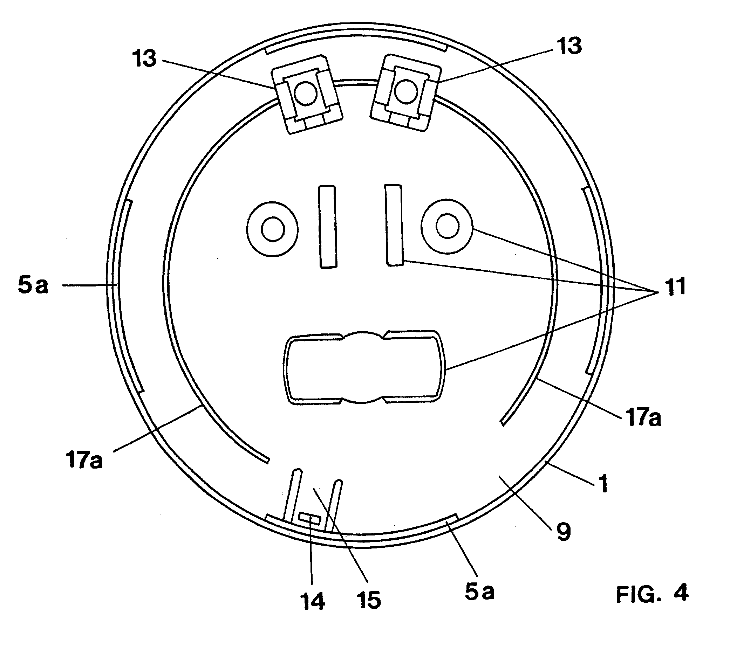

- Figur 4: eine schematische Draufsicht auf das Betriebsgerät bei geöffnetem Deckel (ohne elektrisches Anschlußkabel)

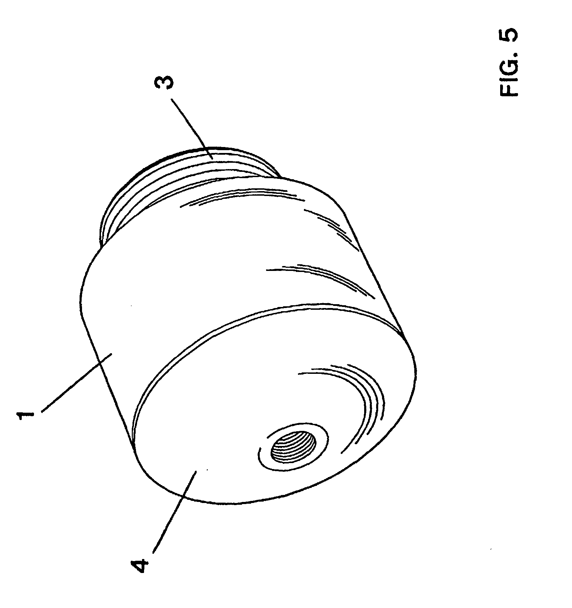

- Figur 5: eine Oberansicht des Betriebsgerätes gemäß des bevorzugten Ausführungsbeispiels von Figur 1

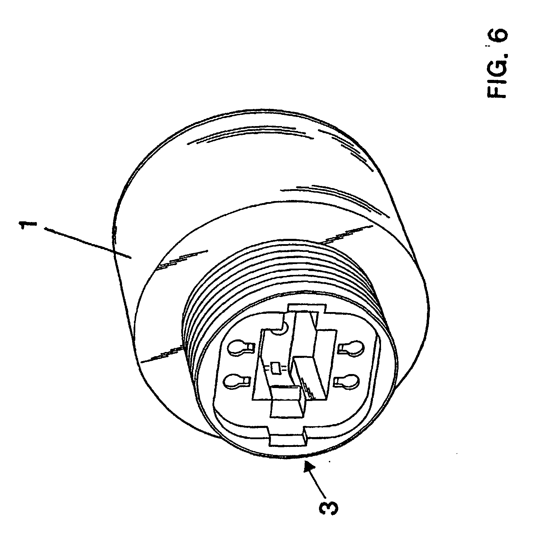

- Figur 6: eine Unteransicht des Betriebsgerätes gemäß des bevorzugten Ausführungsbeispiels von Figur 1

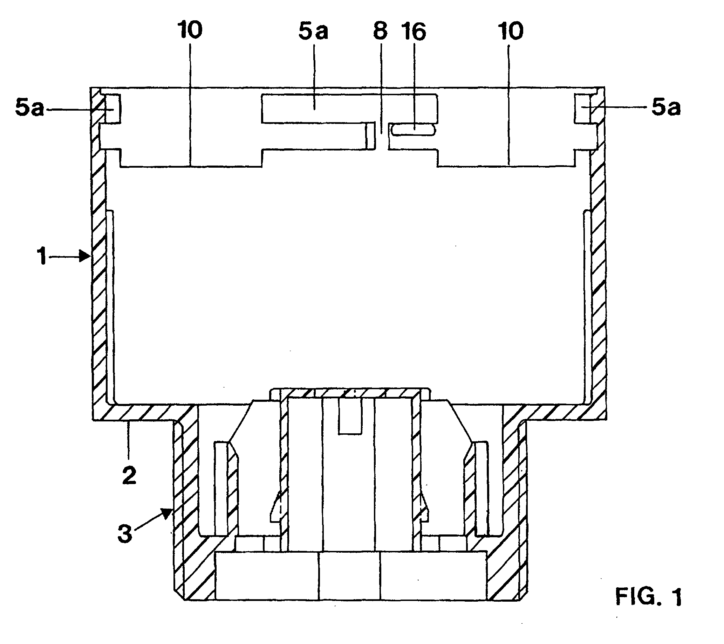

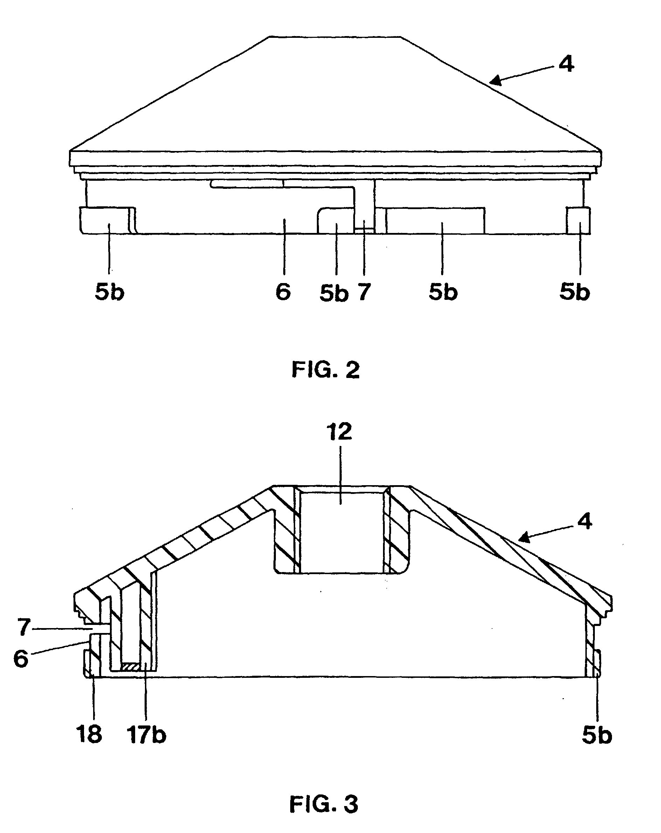

In Figur 1 ist ein Querschnitt durch das Gehäuse eines erfindungsgemäßen Betriebsgerätes entsprechend eines besonders bevorzugten Ausführungsbeispiels abgebildet. Dieses Betriebsgerät wird vornehmlich zum Betrieb von kompakten Niederdruckentladungslampen in Pendelleuchten verwendet. Das Gehäuse 1 besteht aus Kunststoff und besitzt eine im wesentlichen kreiszylindrische Form. Am Boden 2 des Gehäuses 1 ist eine Fassung 3 zur Aufnahme des Sockels einer kompakten Niederdruckentladungslampe (nicht abgebildet) angeformt. Der Außendurchmesser des Gehäuses 1 beträgt oberhalb der Fassung 3 ungefähr 58 mm. Die Oberseite des Gehäuses 1 wird mit Hilfe eines kegelstumpfartigen Deckels 4 (Figur 2) verschlossen. Im Innenraum des Gehäuses 1 ist eine elektrische Schaltung (nicht abgebildet) zum Betrieb einer kompakten Niederdruckentladungslampe (nicht abgebildet) angeordnet. An der offenen Oberseite ist die Innenwand des Gehäuses mit mehreren Noppen 5a versehen, die äquidistant entlang einer Kreislinie angeordnet sind. Der Deckel 4 ist an seiner Außenwand ebenfalls mit Noppen 5b ausgestattet, die äquidistant entlang einer Kreislinie angeordnet sind. Die Länge dieser Deckelnoppen 5b ist dabei geringfügig kleiner als der Abstand zwischen den Noppen 5a an der Innenwand des Gehäuses 1. Die Noppen 5a, 5b bilden einen Bajonettverschluß zwischen Deckel 4 und Gehäuse 1.

Außerdem weist der Deckel 4 im Bereich der Noppen 5b eine federnd ausgebildete Rastlasche 6 auf, die durch eine L-förmige Aussparung 7 in der Deckelwandung begrenzt wird. An der Innenwand des Gehäuses 1 ist im Bereich der Noppen 5a eine auf die Rastlasche 6 abgestimmte Rastnase 8 angeformt, hinter die die Rastnase 6 beim Verschließen des Deckels 4 einschnappt bzw. einrastet. Die Rastlasche 6 und die Rastnase 8 bilden zusammen einen Schnappverschluß.

Das Betriebsgerät besitzt ferner eine kreisscheibenförmige Kontaktplatine 9, die auf einem ringförmig umlaufenden Absatz 10, der an der Gehäuseinnenwand angebracht ist, aufliegt. Die Kontaktplatine 10 ist mit einer Zugentlastungsvorrichtung 11 für ein elektrisches Anschlußkabel, das durch eine zentrale Öffnung 12 im Deckel 4 durchgeführt ist, sowie mit elektrischen Anschlüssen 13 für die Adern des Anschlußkabels versehen. Auf der Kontaktplatine 9 befindet sich auch eine Feststellnoppe 14, die mit dem Schnappverschluß 6, 8 zusammenwirkt. Die Feststellnoppe 14 ist auf der Oberseite einer aus der Kontaktplatine 9 ausgestanzten Federzunge 15 angeordnet ist. Sie 14 dient beim Abschrauben des Deckels 4 zur Fixierung der Rastlasche 6 in der entriegelten Stellung des Schnappverschlusses 6, 8. Dazu besitzt die Rastlasche 6 an ihrer Unterkante, im Bereich ihres freien Endes, eine Kerbe 18, in die die Feststellnoppe 14 einrastet.

In der Gehäusewandung 1 ist im Bereich der Noppen 5a, unmittelbar neben der Rastnase 8 ein schmaler Schlitz 16 angebracht. Dieser Schlitz 16 besitzt eine Länge von ca. 4 mm und eine Breite von ca. 1,5 mm. Bei geschlossenem Deckel 4, sind, ausgehend von der Zylinderachse des Gehäuses 1, die Feststellnoppe 14, das freie Ende der Rastlasche 6 und der Schlitz 16 entlang eines gemeinsamen Radius angeordnet. Der Bajonett- bzw. Schraubverschluß 5a, 5b ist mit einem Anschlag 17a, 17b ausgestattet, der die Drehbewegung des Deckels 4 beim Öffnen und Verschließen auf ca. 80°, also ungefähr eine Vierteldrehung begrenzt. Die Anschläge werden von einem auf der Kontaktplatine 9 befindlichen, ca. 280° umfassenden Ringsegment 17a und einem am Deckel angeformten Steg 17b gebildet.

Zum Verschließen des Betriebsgerätes wird der Deckel 4 derart auf die Oberseite des Gehäuses 1 aufgesetzt, daß die Noppen 5b des Deckels 4 durch die Zwischenräume der Noppen 5a an der Innenwand des Gehäuses 1 greifen. Anschließend wird der Deckel 4 durch eine Vierteldrehung im Uhrzeigersinn (in Eindrehrichtung) mit dem Gehäuse 1 verschraubt. Dabei rastet die Rastlasche 6 hinter der Rastnase 8 ein und verhindert ein Abschrauben des Deckels, das heißt eine Drehung des Deckels gegen den Uhrzeigersinn (in Ausdrehrichtung). Das Betriebsgerät kann dadurch nicht mit bloßen Händen geöffnet werden. Zur Abnahme des Deckels 4 muß vorher der Schnappverschluß 6, 8 entriegelt werden. Dies geschieht beispielsweise mit Hilfe eines Schraubenziehers, der in den schmalen Schlitz 16 im Gehäuse 1 eingeführt wird. Mit Hilfe des Werkzeuges wird kurzzeitig ein leichter Druck auf die Rastlasche 6 ausgeübt, so daß diese zurückgebogen wird und die Feststellnoppe 14 in die an der Unterseite der Rastlasche 6 angebrachten Kerbe 18 einrastet. Dadurch wird der Schnappverschluß 6, 8 entriegelt und die zurückgebogene Rastlasche 6 in der entriegelten Stellung arretiert. Die Rastlasche 6 bleibt selbst nach dem Herausziehen des Schraubenziehers in der entriegelten Stellung fixiert. Anschließend wird der Deckel 4 zum Öffnen des Bajonett- bzw. Schraubverschlusses 5a, 5b um ca. eine Vierteldrehung, bis zum Anschlag, gegen den Uhrzeigersinn gedreht. Dabei gleitet die entriegelte Rastlasche 6 an der Rastnase 8 vorbei. Gleichzeitig wird die Federzunge 15 durch die Unterkante des Deckels 4 nach unten gedrückt, so daß sich Feststellnoppe 14 und Rastlasche 6 voneinander lösen. Der Deckel kann nun abgenommen werden.

Die Erfindung beschränkt sich nicht auf das oben näher erläuterte Ausführungsbeispiel. Beispielsweise können Deckel 4 und Gehäuse 1 anstelle des Bajonettverschlusses 5a, 5b auch einen Schraubverschluß aufweisen, der aus jeweils einem Schraubgewinde besteht, das beispielsweise an der Deckelaußenwand und an der Innenwand des Gehäuses angebracht ist. Die Rastlasche ist in diesem Fall im Bereich des Schraubgewindes an den Deckel angeformt, während die Rastnase im Bereich des Schraubgewindes an der Innenwand des Gehäuses angeformt ist. Die Gestalt und Anordnung von Rastnase, Rastlasche und Feststellnoppe entsprechen weitgehend der des oben näher beschriebenen Ausführungsbeispiels.

Außerdem kann auch die Deckelform und die Gestalt des Gehäuses variiert werden, der sich bezüglich der Noppen und der Rastlasche von dem des oben erläuterten Ausführungsbeispiels nicht unterscheidet. Beispielsweise kann der kegelstumpfartige Deckel durch einen flachen, kreisscheibenartigen Deckel ersetzt werden. Obwohl der erfindungsgemäße Verschluß besonders günstig für ein zylindrisches Gehäuse verwendet werden kann, ist sein Einsatz nicht auf diese Gehäuseform beschränkt.

## Patentansprüche

1. Betriebsgerät für eine elektrische Lampe mit einem Gehäuse (1), in dessen Innenraum Bauteile einer elektrischen Schaltungsanordnung zum Betrieb der Lampe untergebracht sind, wobei das Gehäuse (1) einen abnehmbaren Deckel (4) besitzt und der Deckel (4) einen Schnappverschluß (6, 8), der beim Verschließen des Deckels (4) einrastet und über einen schmalen Schlitz (16) im Gehäuse (1) zugänglich und entriegelbar ist, aufweist,
**dadurch gekennzeichnet, daß** der Deckelverschluß aus einem mit dem Schnappverschluß (6, 8) kombinierten Bajonett- oder Schraubverschluß (5a, 5b) besteht, wobei
- der Schnappverschluß von einer Rastlasche (6) und einer Rastnase (8) gebildet wird, hinter der die Rastlasche (6) beim Verschließen des Deckels (4) einschnappt, und
- der Schnappverschluß (6, 8) zusätzlich eine Feststellnoppe (14) aufweist, hinter der die Rastlasche (6) zur Entriegelung des Schnappverschlusses (6, 8) und zum anschließenden Öffnen des Bajonett- oder Schraubverschlusses (5a, 5b) einrastbar ist.

2. Betriebsgerät für eine elektrische Lampe nach Anspruch 1, **dadurch gekennzeichnet, daß** der Bajonett- oder Schraubverschluß aus mehreren Noppen (5a, 5b) besteht, die derart am Deckel (4) und an der Wand des Gehäuses (1) angebracht sind, daß die Noppen (5b) des Deckels (4) durch die Zwischenräume zwischen den Noppen (5a) am Gehäuse (1) hindurchgreifen können.

3. Betriebsgerät für eine elektrische Lampe nach Anspruch 1, **dadurch gekennzeichnet, daß** der Bajonett- oder Schraubverschluß aus jeweils einem Schraubgewinde besteht, die am Gehäuse und am Deckel angebracht sind.

4. Betriebsgerät für eine elektrische Lampe nach Anspruch 1, **dadurch gekennzeichnet, daß** der Bajonett- oder Schraubverschluß (5a, 5b) einen Anschlag (17a, 17b) besitzt, der den Drehwinkel des Deckels (4) in Eindrehrichtung begrenzt.

5. Betriebsgerät für eine elektrische Lampe nach Anspruch 1, **dadurch gekennzeichnet, daß** das Gehäuse (1) eine im wesentlichen kreiszylindrische Form aufweist und der Gehäuseboden (2) mit einer Fassung (3) zur Aufnahme einer elektrischen Lampe ausgestattet ist.

6. Betriebsgerät für eine elektrische Lampe nach Anspruch 1, **dadurch gekennzeichnet, daß** der Deckel (4) eine zentrale Öffnung (12) für ein elektrisches Anschlußkabel besitzt.

7. Betriebsgerät für eine elektrische Lampe nach den Ansprüchen 1, 5 und 6, **dadurch gekennzeichnet, daß** das Betriebsgerät eine im Innenraum des Gehäuses (1), unterhalb des Deckels (4), angeordnete kreisscheibenartige Kontaktplatine (9) besitzt, die mit einer Zugentlastungsvorrichtung (11) sowie mit Anschlüssen (13) für das Anschlußkabel versehen ist.

8. Betriebsgerät für eine elektrische Lampe nach den Ansprüchen 1 und 7, **dadurch gekennzeichnet, daß** die Feststellnoppe (14) auf der Kontaktplatine (9) angeordnet ist.

9. Betriebsgerät für eine elektrische Lampe nach Anspruch 8, **dadurch gekennzeichnet, daß** die Kontaktplatine (9) eine Federzunge (15) besitzt, auf der die Feststellnoppe (14) angebracht ist.

10. Betriebsgerät für eine elektrische Lampe nach den Ansprüchen 1, 7 und 9, **dadurch gekennzeichnet, daß** die Feststellnoppe (14), das freie Ende der Rastlasche (6) und der schmale Schlitz (16) in der Gehäusewandung, ausgehend von der Symmetrieachse des zylindrischen Gehäuses (1), auf einem gemeinsamen Radius angeordnet sind.

## Claims

1. Operating device for an electric lamp, having a housing (1) in whose interior components of an electric circuit arrangement for operating the lamp are accommodated, the housing (1) having a removable cover (4), and the cover (4) having a snap fastener (6, 8) which locks home upon closure of the cover (4) and is accessible and can be unlocked via a narrow slot (16) in the housing (1), **characterized in that** the cover closure consists of a bayonet or screw closure (5a, 5b) combined with the snap fastener (6, 8),
- the snap fastener being formed by a catch tab (6) and a catch nose (8) behind which the catch tab (6) snaps in upon closure of the cover (4), and
- the snap closure (6, 8) additionally having a locking knob (14) behind which the catch tab (6) can be locked home in order to unlock the snap fastener (6, 8) and subsequently to open the bayonet or screw closure (5a, 5b).

2. Operating device for an electric lamp according to Claim 1, **characterized in that** the bayonet or screw closure consists of a plurality of knobs (5a, 5b) which are fitted on the cover (4) and on the wall of the housing (1) in such a way that the knobs (5b) of the cover (4) can reach through the interspaces between the knobs (5a) on the housing (1).

3. Operating device for an electric lamp according to Claim 1, **characterized in that** the bayonet or screw closure respectively consists of a screwthread which are provided on the housing and on the cover.

4. Operating device for an electric lamp according to Claim 1, **characterized in that** the bayonet or screw closure (5a, 5b) have a stop (17a, 17b) which delimits the angle of rotation of the cover (4) in the screwing-in direction.

5. Operating device for an electric lamp according to Claim 1, **characterized in that** the housing (1) has a substantially circularly cylindrical shape, and the housing base (2) is equipped with a mount (3) for holding an electric lamp.

6. Operating device for an electric lamp according to Claim 1, **characterized in that** the cover (4) has a central opening (12) for an electric connecting cable.

7. Operating device for an electric lamp according to Claims 1, 5 and 6, **characterized in that** the operating device has a contact plate (9) of the type of a circular disk, which is arranged in the interior of the housing (1) below the cover (4), and is provided with a strain relief device (11) as well as with terminals (13) for the connecting cable.

8. Operating device for an electric lamp according to Claims 1 and 7, **characterized in that** the locking knob (14) is arranged on the contact plate (9).

9. Operating device for an electric lamp according to Claim 8, **characterized in that** the contact plate (9) has a spring tongue (15) on which the locking knob (14) is fitted.

10. Operating device for an electric lamp according to Claims 1, 7 and 9, **characterized in that** the locking knob (14), the free end of the catch tab (6) and the narrow slot (16) in the housing wall are arranged, starting from the axis of symmetry of the cylindrical housing (1), on a common radius.

## Revendications

1. Appareil d'alimentation pour une lampe électrique, comportant un boîtier (1) dans l'espace intérieur duquel sont logés des composants d'un circuit électrique destiné à faire fonctionner la lampe, le boîtier (1) possédant un couvercle (4) amovible, et le couvercle (4) présentant une fermeture par encliquetage (6, 8), qui s'enclenche lors de la fermeture du couvercle (4), et est accessible et peut être déverrouillée par l'intermédiaire d'une fente (16) étroite dans le boîtier (1), **caractérisé en ce que** la fermeture de couvercle est constituée d'une fermeture à baïonnette ou à vis (5a, 5b) combinée à la fermeture par encliquetage (6, 8),
- la fermeture par encliquetage étant formée par une languette d'encliquetage (6) et un talon d'encliquetage (8) derrière lequel s'enclenche la languette d'encliquetage (6) lors de la fermeture du couvercle (4), et
- la fermeture par encliquetage (6, 8) présentant en supplément, un plot d'immobilisation (14) derrière lequel peut s'encliqueter la languette d'encliquetage (6) pour déverrouiller la liaison par encliquetage (6, 8) et permettre l'ouverture qui suit, de la fermeture à baïonnette ou à vis (5a, 5b).

2. Appareil d'alimentation pour une lampe électrique selon la revendication 1, **caractérisé en ce que** la fermeture à baïonnette ou à vis est constituée de plusieurs plots (5a, 5b) qui sont placés sur le couvercle (4) et sur la paroi du boîtier (1) de façon telle, que les plots (5b) du couvercle (4) puissent s'engager dans les espaces intermédiaires entre les plots (5a) sur le boîtier (1).

3. Appareil d'alimentation pour une lampe électrique selon la revendication 1, **caractérisé en ce que** la fermeture à baïonnette ou à vis est constituée par un filetage hélicoïdal respectivement placé sur le boîtier et sur le couvercle.

4. Appareil d'alimentation pour une lampe électrique selon la revendication 1, **caractérisé en ce que** la fermeture à baïonnette ou à vis (5a, 5b) possède une butée (17a, 17b) qui limite l'angle de rotation du couvercle (4) dans le sens du vissage de montage.

5. Appareil d'alimentation pour une lampe électrique selon la revendication 1, **caractérisé en ce que** le boîtier (1) présente une forme sensiblement cylindrique circulaire, et le fond (2) du boîtier est équipé d'une douille (3) pour recevoir une lampe électrique ou ampoule.

6. Appareil d'alimentation pour une lampe électrique selon la revendication 1, **caractérisé en ce que** le couvercle (4) possède une ouverture centrale (12) pour un câble de branchement électrique.

7. Appareil d'alimentation pour une lampe électrique selon la revendication 1, 5 et 6, **caractérisé en ce que** l'appareil d'alimentation de service possède une platine de contact (9) en forme de disque circulaire, qui est disposée dans l'espace intérieur du boîtier (1), sous le couvercle (4), et qui est pourvue d'un dispositif anti-traction (11) ainsi que de bornes (13) pour le câble de branchement.

8. Appareil d'alimentation pour une lampe électrique selon les revendications1 et 7, **caractérisé en ce que** le plot d'immobilisation (14) est disposé sur la platine de contact (9).

9. Appareil d'alimentation pour une lampe électrique selon la revendication 8, **caractérisé en ce que** la platine de contact (8) possède une languette élastique (15) sur laquelle est placé le plot d'immobilisation (14).

10. Appareil d'alimentation pour une lampe électrique selon les revendications 1, 7 et 9, **caractérisé en ce que** le plot d'immobilisation (14), l'extrémité libre de la languette d'encliquetage (6) et la fente étroite (16) dans la paroi du boîtier, en partant de l'axe de symétrie du boîtier (1) cylindrique, se situent sur un rayon commun.
